# EUROPÄISCHE PATENTSCHRIFT

(11) **EP 3 817 904 B1**
(45) Veröffentlichungstag und Bekanntmachung des Hinweises auf die Patenterteilung: **11.01.2023**
(21) Anmeldenummer: 19755265.6
(22) Anmeldetag: 02.07.2019
(51) Int. Cl.: B29B 7/72, C08J 3/00, C08J 11/04, C08G 63/78

(54) **VERFAHREN ZUR HERSTELLUNG EINER POLYKONDENSATSCHMELZE AUS EINEM PRIMÄRMATERIAL UND EINEM SEKUNDÄRMATERIAL**
METHOD FOR PRODUCING A POLYCONDENSATE MELT FROM A PRIMARY MATERIAL AND FROM A SECONDARY MATERIAL
PROCÉDÉ POUR LA PRODUCTION D'UN POLYCONDENSAT EN FUSION À PARTIR D'UN MATÉRIAU PRIMAIRE ET D'UN MATÉRIAU SECONDAIRE

(30) Priorität: 03.07.2018 AT 505702018
(43) Veröffentlichungstag der Anmeldung: 12.05.2021
(73) Patentinhaber: Next Generation Recyclingmaschinen GmbH, 4101 Feldkirchen an der Donau (AT)
(72) Erfinder: PICHLER, Thomas, 4171 St. Peter am Wimberg (AT)
(74) Vertreter: Burger, Hannes
(86) Internationale Anmeldenummer: PCT/AT2019/060219
(87) Internationale Veröffentlichungsnummer: WO 2020/006591

(56) Entgegenhaltungen:
- EP-A1- 1 084 171
- EP-A1- 3 274 148
- EP-B2- 2 021 116
- EP-B2- 2 021 116
- DE-A1-102015 226 043

## Beschreibung

Die Erfindung betrifft ein Verfahren zur Herstellung einer Polykondensatschmelze aus einem Primärmaterial und einem Sekundärmaterial aus jeweils im Wesentlichen artgleichen Werkstoffen.

Die EP 2 021 116 B2 beschreibt ein Verfahren und eine Vorrichtung zur Herstellung eines Formkörpers aus einer Mischung von Altpolyester und Frischpolyester, mit folgenden Schritten:
a) Aufschmelzen des gewaschenen Altpolyesters in einer Aufschmelzvorrichtung,
b) Zugabe von Diol zur Schmelze des Altpolyesters in oder nach der Aufschmelzvorrichtung,
c) Vermischen der Schmelze des Altpolyesters mit einer Schmelze von Frischpolyester aus einem Schmelzereaktor,
d) Polykondensation der Schmelzemischung in einem Hochviskos-Schmelzereaktor unter reduziertem Druck,
e) Granulierung der Polyesterschmelze in einem Unterwassergranulator bei einer Wassertemperatur zwischen 90 und 99°C,
f) Abtrennen des Wassers vom Granulat unter möglichst geringer Abkühlung des Granulates,
g) Überführen des so erhaltenen wasserarmen Granulates nach der Wasserabtrennung direkt oder mittels eines Dosierorgans, besonders bevorzugt mittels einer Zellenradschleuse, in einen Dealdehydisierungsbehälter,
h) Behandeln des Granulates im Dealdehydisierungsbehälter mittels eines Spülluftstroms.

Nachteilig bei diesem Verfahren ist, dass durch die Zugabe von Diol zur Schmelze des Altpolyesters die intrinsische Viskosität stets verringert wird und ein innerer Abbau der Schmelze damit verbunden ist. Das Zugabemittel Diol ist im nachfolgenden Polykondensationsprozess zur Erhöhung der intrinsischen Viskosität wiederum aus der Schmelze zu entfernen. Es kann zwar durch den nachträglichen gemeinsamen Polykondensationsprozess der Wert der intrinsischen Viskosität erhöht werden, jedoch sind dafür hohe Temperaturen und vor allem eine höhere Kapazität des Vakuumsystems nötig, was zu einer schlechteren Energiebilanz führt. Es werden stets Schmelzeteilströme mit einer zueinander unterschiedlichen intrinsischen Viskosität zusammengeführt und dann gemeinsam zu deren weiteren Behandlung in einen DHI-Reaktor eingespeist.

Weiter ist es bei bekannten Verfahren von Nachteil, dass die Primärschmelze und die Sekundärschmelze stets unterschiedliche I.V. - Werte aufweisen. Daher ist für das Endprodukt einerseits eine Durchmischung auf makroskopischer Ebene notwendig. Andererseits ist auch auf mikroskopischer Ebene, d.h. selbst bei ausreichender Homogenisierung, zu beachten, dass der I.V. - Wert selbst nur eine gemittelte Größe über die zugrundeliegende Molmassenverteilung darstellt. Es bestehen quantitative Zusammenhänge zwischen unterschiedlichen Kennwerten der Molmassenverteilung und dem I.V. - Wert. In der einschlägigen Literatur wird dieser mit dem sogenannten Viskositätsmittel in Verbindung gebracht, das in etwa im Bereich des sogenannten Gewichtsmittels (mass average molecular weight) der Molmassenverteilung liegt.

Darüber hinaus lassen sich empirische, polymerspezifische Beziehungen zwischen dem Maximum der Molmassenverteilung und dem I.V. - Wert finden. Über die Breite oder allgemein die Form der Verteilung macht der I.V. - Wert allerdings keine Aussage. Das bloße Vermischen zweier monomodaler Schmelzen mit unterschiedlicher I.V. führt zunächst zu einer bimodalen Molmassenverteilung mit zwei Maxima, die den unterschiedlichen I.V. - Werten von Primär- und Sekundärschmelze entsprechen. Erst durch längeres Mischen und Umesterungsreaktionen (bei Polyestern) oder Umamidierungsreaktionen (bei Polyamiden) nähern sich die beiden Maxima einander an und geben schließlich eine Molmassenverteilung mit nur einem Maximum, jedoch mit einer größeren Breite als die beiden Einzelströme bzw. Schmelzeteilströme. Die Messung der I.V. bildet diesen Prozess nicht ab, weil anstelle einer Verteilungskurve immer nur ein einzelner Wert ermittelt wird.

Solange die Schmelze darüber hinaus auch makroskopisch noch nicht gut durchmischt ist, d.h. noch einzelne Bereiche aus reiner Primärschmelze oder Sekundärschmelze identifizierbar sind, ergeben mehrere I.V. - Messungen lediglich eine größere Streuung je nach Ort der Probenahme.

Die Bestimmung der Molmassenverteilung erfolgt typischerweise über die sogenannte Gelpermeationschromatographie (GPC). Sie liefert eine Häufigkeitsverteilung über Polymerketten unterschiedlicher Länge bzw. Molmasse. Zur Charakterisierung dienen drei Mittelwerte:
- das Zahlenmittel Mn (number average molecular weight),
- das Gewichtsmittel oder Massenmittel Mw (mass average molecular weight) und
- das sogenannte Z-Mittel (Z average molecular weight).

Die Breite der Verteilung wird üblicherweise über das Verhältnis von Gewichtsmittel zu Zahlenmittel Mw / Mn, den sogenannten Polydispersitätsindex (PDI), angegeben.

Aufgabe der vorliegenden Erfindung ist es, die Nachteile des Standes der Technik zu überwinden und ein Verfahren zur Verfügung zu stellen, mittels dem ein zu rezyklierender Polykondensationswerkstoff unter möglichster Vermeidung eines bewussten Abbaus als aufbereitete Sekundärschmelze zu einer Polykondensations-Primärschmelze zugemischt werden kann, ohne deren intrinsische Viskosität zu verändern sowie eine homogene Molekulargewichtsverteilung in der Gesamtschmelze zu erreichen.

Diese Aufgabe wird durch ein Verfahren gemäß den Ansprüchen gelöst.

Das Verfahren dient zur Herstellung einer Polykondensatschmelze aus einem Primärmaterial und einem Sekundärmaterial aus jeweils im Wesentlichen artgleichen Werkstoffen von gleicher chemischer Grundzusammensetzung, umfassend folgende Schritte:
- Bereitstellen eines ersten Schmelzeteilstroms "I" aus dem Primärmaterial, welches Primärmaterial aus zumindest einem Monomer synthetisiert wurde,
- Ermitteln eines ersten Messwertes der intrinsischen Viskosität des ersten Schmelzeteilstroms "I" aus dem Primärmaterial,
- Bereitstellen eines zweiten Schmelzeteilstroms "II" aus dem Sekundärmaterial, welches Sekundärmaterial aus einem zumindest einmal bereits verarbeiteten Polykondensatmaterial gebildet ist,
- Ermitteln eines zweiten Messwertes der intrinsischen Viskosität des zweiten Schmelzeteilstroms "II" aus dem Sekundärmaterial,
- Bildung eines Differenzwertes aus dem ersten Messwert der intrinsischen Viskosität des Primärmaterials und dem zweiten Messwert der intrinsischen Viskosität des Sekundärmaterials,
- Erhöhen oder Reduzieren der intrinsischen Viskosität des zweiten Schmelzeteilstroms "II" aus dem Sekundärmaterial aufgrund des ermittelten Differenzwertes mittels einer ersten Schmelze-Behandlungsvorrichtung auf den ermittelten ersten Messwert der intrinsischen Viskosität des ersten Schmelzeteilstroms "I" aus dem Primärmaterial oder unverändertes Beibehalten der intrinsischen Viskosität des zweiten Schmelzeteilstroms "II" aus dem Sekundärmaterial aufgrund des ermittelten Differenzwertes,
- Nachfolgende Bildung eines gemeinsamen Schmelzestroms der Polykondensatschmelze aus dem zweiten Schmelzeteilstrom "II" aus dem Sekundärmaterial, bei welchem die durch die intrinsische Viskosität definierte Qualität an die Qualität des ersten Schmelzeteilstroms "I" angeglichen worden ist oder diese bereits aufweist, durch Zusammenführen und Vereinen mit dem ersten Schmelzeteilstrom "I" aus dem Primärmaterial.

Vorteilhaft ist bei diesem Vorgehen, dass ein erster Schmelzeteilstrom aus einem Primärmaterial in bekannter Weise hergestellt wird und dieser bis zum Zusammenmischen mit dem zweiten Schmelzeteilstrom aus dem aufbereiteten Sekundärmaterial grundsätzlich unverändert bleibt. Um die in immer größeren Massen anfallenden Kunststoffabfälle einer Wiederverwertung zuzuführen, wird ein aus einem im Wesentlichen artgleichen Werkstoff gebildeter zweiter Schmelzeteilstrom aus einem Sekundärmaterial bereitgestellt und mit dem ersten Schmelzeteilstrom zu einem gemeinsamen Schmelzestrom zusammengeführt. Vor dem Zusammenführen und Vereinen der beiden Schmelzeteilströme ist hier vorgesehen, dass der zweite Schmelzeteilstrom aus dem Sekundärmaterial in seiner Qualität, welche hier durch die intrinsische Viskosität definiert wird, an die Qualität des ersten Schmelzeteilstroms angeglichen worden ist oder diese bereits aufweist. Somit sind auch die Molmassenverteilungen der beiden Schmelzeteilströme sehr ähnlich und weisen insbesondere ein Maximum bei der gleichen Molmasse auf. Die resultierende Molmassenverteilung ergibt sich daher zeitkonstant durch Addition der beiden Einzelverteilungen bei unverändertem Maximum der Kurve und erfordert keine weitere Verweilzeit.

Um stets diese exakte Aufbereitung und Anpassung der Qualität des zweiten Schmelzeteilstroms an die Qualität des ersten Schmelzeteilstroms durchführen zu können, wird die Qualität des ersten Schmelzeteilstroms durch Ermitteln eines ersten Messwertes der intrinsischen Viskosität festgestellt. Dieser erste Messwert dient als Bezugswert für die Ausbildung und Anpassung der Qualität des aufbereiteten, zweiten Schmelzeteilstroms aus dem Sekundärmaterial. Vor dem Vereinen der beiden Schmelzeteilströme wird auch ein zweiter Messwert der intrinsischen Viskosität des zweiten Schmelzeteilstroms aus dem Sekundärmaterial ermittelt.

Durch einen Auswerte- und Vergleichsvorgang werden die beiden ermittelten Messwerte, nämlich der erste Messwert des ersten Schmelzeteilstroms und der zweite Messwert des zweiten Schmelzeteilstroms, zueinander in Verbindung oder Verhältnis gesetzt. Je nach Auswerteergebnis der zueinander in Beziehung gesetzten ersten und zweiten Messwerte wird entweder ein Eingriff in die Behandlungsbedingungen vorgenommen oder es werden die Behandlungsbedingungen unverändert beibehalten. Damit ist gewährleistet, dass stets Schmelzeteilströme mit zueinander gleicher Qualität zu einem gemeinsamen Schmelzestrom zusammengeführt werden.

Weiters ist ein Vorgehen vorteilhaft, bei dem der aus den beiden Schmelzeteilströmen "I + II" gebildete gemeinsame Schmelzestrom der Polykondensatschmelze mittels einer Mischvorrichtung durchmischt wird. Durch das zusätzliche Vermischen der beiden Schmelzeteilströme kann eine noch homogenere und gleichmäßigere Schmelze bereitgestellt oder gebildet werden.

Eine weitere vorteilhafte Vorgehensweise ist dadurch gekennzeichnet, dass der gemeinsame Schmelzestrom der Polykondensatschmelze unmittelbar einer nachfolgend angeordneten Formgebungseinheit zugeführt wird. Durch das unmittelbare Zuführen des gemeinsamen Schmelzestroms zu einer gleich daran anschließenden Formgebungseinheit kann Energie eingespart werden, welche ansonsten bei einer Abkühlung und nachfolgenden neuerlichen Erwärmung zuzuführen wäre.

Vorteilhaft ist auch eine Verfahrensvariante, bei welcher der gemeinsame Schmelzestrom der Polykondensatschmelze granuliert wird. Unabhängig davon kann aber auch aus dem gemeinsamen Schmelzestrom ein Kunststoffgranulat gebildet werden, welches einer nachfolgenden Weiterverarbeitung zugeführt werden kann.

Eine andere Vorgehensweise zeichnet sich dadurch aus, dass zur Bildung des zweiten Schmelzeteilstroms "II" aus dem Sekundärmaterial ein bereitgestelltes, zumindest einmal bereits verarbeitetes Polykondensatmaterial zerkleinert, gegebenenfalls gereinigt wird, und in einer Aufschmelzvorrichtung der zweite Schmelzeteilstrom "II" aus dem Sekundärmaterial gebildet wird. Damit kann aus dem zur Wiederverwertung vorgesehenen Kunststoffmaterial der zur nachfolgenden Behandlung vorgesehene zweite Schmelzestrom gebildet werden. Weiters ist ein Vorgehen vorteilhaft, bei dem nach dem Aufschmelzen des zumindest einmal bereits verarbeiteten Polykondensatmaterials und vor dem Zuführen desselben in die erste Schmelze-Behandlungsvorrichtung ein dritter Messwert der intrinsischen Viskosität des zweiten Schmelzeteilstroms "II" aus dem Sekundärmaterial ermittelt wird. Damit können bereits vor dem Eintritt des zu behandelnden zweiten Schmelzeteilstroms die Behandlung und damit die Behandlungsbedingungen in der ersten Schmelze-Behandlungsvorrichtung soweit angepasst und adaptiert werden, dass die aufgrund des ersten Messwerts vorgegebene Qualität sichergestellt werden kann. Damit können eine noch bessere Angleichung und raschere Rücksichtnahme auf die sich ändernden Qualitäten der der Behandlungsvorrichtung zugeführten Schmelze durchgeführt werden.

Eine andere Vorgehensweise zeichnet sich dadurch aus, wenn
- der zweite Schmelzeteilstrom "II" der ersten Schmelze-Behandlungsvorrichtung einer Kammer in einem von einer Aufstandsfläche beabstandeten Kopfbereich zugeführt wird, in welcher Kammer ein Druck kleiner 20 mbar herrscht,
- der zweite Schmelzeteilstrom "II" mittels einer Lochplatte mit einer Vielzahl von Öffnungen in dünne Schmelzefäden aufgeteilt wird,
- dass die Schmelzefäden die Kammer im freien Fall in Richtung auf die Aufstandsfläche passieren,
- die Schmelzefäden in einem Sammelbehälter unterhalb der Kammer zu einem Schmelzebad zusammengeführt werden, wobei der Sammelbehälter im unmittelbaren seitlichen Anschluss an die Kammer angeordnet ist, und im Sammelbehälter ebenfalls ein Druck von kleiner 20 mbar herrscht,
- die das Schmelzebad bildende Schmelze im Sammelbehälter von einem in horizontaler Lage ausgerichteten, vorzugsweise schneckenförmigen, Misch- und Austragsteil durchmischt wird,
- eine Höhe des Schmelzebades im Sammelbehälter so hoch gewählt wird, dass das Misch- und Austragsteil im Sammelbehälter nicht vollständig von der Schmelze bedeckt wird und dabei die Oberfläche der Schmelze durch eine Drehbewegung des Misch- und Austragsteils immer wieder aufgerissen und mehrmalig erneuert wird, und dabei der reduzierte Druck auf das Schmelzebad einwirkt,
- die bei den dünnen Schmelzefäden begonnene Polykondensation im Schmelzebad durch das Verweilen und in Bewegung halten fortgesetzt wird, und so das Polymerkettenwachstum und damit eine weitere Erhöhung der intrinsischen Viskosität bewirkt wird, und wenn
- die behandelte Schmelze als zweiter, behandelter Schmelzeteilstrom "II" aus dem Sammelbehälter abgeführt wird.

Damit kann bereits durch das Aufteilen des zweiten Schmelzestroms in dünne Schmelzefäden und deren freien Fall in Richtung auf die Aufstandsfläche eine erste Behandlungsstufe der zu behandelnden Schmelze geschaffen werden. Eine zusätzliche, weitere Qualitätssteigerung der Schmelze kann in dem unterhalb der Fallkammer befindlichen Schmelzebad durch das Misch- und Austragsteil und das Aufreißen der Oberfläche der Schmelze sowie den gewählten Unterdruck durchgeführt werden. So kann ein zusätzlicher Polykondensationsvorgang bei der zu behandelnden Schmelze erzielt werden.

Eine weitere vorteilhafte Vorgehensweise ist dadurch gekennzeichnet, dass die Behandlungsdauer des zweiten Schmelzeteilstroms "II" in der ersten Schmelze-Behandlungsvorrichtung und/oder der in der Kammer der ersten Schmelze-Behandlungsvorrichtung herrschende Druck und/oder die in der Kammer der ersten Schmelze-Behandlungsvorrichtung herrschende Temperatur basierend auf dem ermittelten dritten Messwert der intrinsischen Viskosität des zweiten Schmelzeteilstroms "II" aus dem Sekundärmaterial und dem ermittelten ersten Messwert der intrinsischen Viskosität des Primärmaterials ermittelt werden und die Behandlung und damit die Angleichung der intrinsischen Viskosität durchgeführt wird. Damit können bereits vorab je nach ermitteltem dritten Messwert und der damit verbundenen Qualität des der ersten Behandlungsvorrichtung zugeführten Schmelzeteilstroms Parameter so für die unterschiedlichen Behandlungsvorgänge festgelegt werden, dass stets eine gleichmäßige Qualität der Schmelze des zweiten Schmelzeteilstroms bereitgestellt werden kann.

Vorteilhaft ist auch eine Verfahrensvariante, bei welcher ein dritter Schmelzeteilstrom "III" aus dem gemeinsamen Schmelzestrom der Polykondensatschmelze entnommen wird oder abgezweigt wird und der dritte Schmelzeteilstrom "III" einer weiteren Behandlungsvorrichtung zugeführt wird. Damit wird die Möglichkeit geschaffen, aus dem gemeinsamen Schmelzestrom für eine Teilanwendung eine Teilmenge an Schmelze abzuziehen oder abzuzweigen und diese in einer eigenen weiteren Behandlungsvorrichtung an die dafür benötigte Qualität unabhängig vom gemeinsamen Schmelzestrom anpassen zu können.

Weiters ist ein Vorgehen vorteilhaft, bei dem als weitere Behandlungsvorrichtung eine solche, wie die erste Behandlungsvorrichtung verwendet wird. Damit kann auch der dritte Schmelzeteilstrom mit einer gleichwirkenden Behandlungsvorrichtung einer einwandfreien Behandlung zugeführt werden.

Eine weitere vorteilhafte Vorgehensweise ist dadurch gekennzeichnet, dass der Sollwert der intrinsischen Viskosität in einer Steuerungseinheit als Referenzwert hinterlegt wird. Damit wird für die Gesamtanlage ein Sollwert für die herzustellende Qualität der Polykondensatschmelze vorgegeben. So kann die Anlage je nach Bedarf an unterschiedliche herzustellende Produkte in ihrem Verfahrensablauf angepasst werden.

Vorteilhaft ist auch eine Verfahrensvariante, bei welcher basierend auf dem ermittelten ersten Messwert der intrinsischen Viskosität des ersten Schmelzeteilstroms "I" aus dem Primärmaterial die intrinsische Viskosität des ersten Schmelzeteilstroms "I" an den festgelegten Sollwert der intrinsischen Viskosität der herzustellenden Polykondensatschmelze angeglichen wird. Damit kann ein Abweichen der Qualität des hergestellten, ersten Schmelzeteilstroms vom vorgegebenen Sollwert erkannt und rasch darauf reagiert werden. Es ist aber stets sichergestellt, dass die beiden Schmelzeteilströme vor dem Zusammenführen oder Vereinen derselben die gleiche Qualität zueinander aufweisen.

Schließlich zeichnet sich eine andere Vorgehensweise dadurch aus, dass das Angleichen der intrinsischen Viskosität des ersten Schmelzeteilstroms "I" aus dem Primärmaterial an den festgelegten Sollwert der intrinsischen Viskosität der Polykondensatschmelze mittels einer zweiten Schmelze-Behandlungsvorrichtung, insbesondere eines Hochviskositäts-Scheibenreaktors, durchgeführt wird. Damit kann in bekannter Weise die Qualität des ersten Schmelzeteilstroms angeglichen und/oder stets gleich beibehalten werden.

Zum besseren Verständnis der Erfindung wird diese anhand der nachfolgenden Figuren näher erläutert.

Es zeigt in einer stark vereinfachten, schematischen Darstellung:
- Fig. 1: ein Schemabild einer Anlage zur Herstellung und Behandlung einer Polykondensatschmelze aus einem Primärmaterial und einem Sekundärmaterial aus jeweils im Wesentlichen artgleichen Werkstoffen;
- Fig. 2: zeigt in einem Diagramm die Molmassenverteilungen der Schmelze aus dem Primärmaterial, der Schmelze aus dem Sekundärmaterial vor der Anpassung deren Qualität, der Schmelze aus dem Sekundärmaterial nach der Anpassung deren Qualität sowie der vereinigten Polykondensatschmelze.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

Nachfolgend wird unter anderem auf die Viskosimetrie Bezug genommen, wobei es sich dabei um die Messung der Viskosität (Zähigkeit) von Flüssigkeiten, fließfähigen Stoffen oder Gasen handelt. Die Viskosität wird in einem Messgerät, dem Viskosimeter, bestimmt, indem für eine definierte Menge der Flüssigkeit oder des Gases die Durchflusszeit und/oder die Durchflussgeschwindigkeit durch ein festgelegtes Volumen, meist in einer Kapillare, gemessen wird. Die Belastung wird dabei durch ein Gewicht konstant gehalten bzw. strömt das Fluid unter seinem eigenen Gewicht frei aus. Alternativ kann stattdessen z.B. mittels Schmelzepumpe der Volumendurchfluss konstant gehalten werden, und der Druckverlust über eine Kapillare wird mittels zweier Drucksensoren gemessen.

Der Volumenstrom (oder ungenauer die Durchflussrate) ist eine physikalische Größe aus der Fluidmechanik. Sie gibt an, wie viel Volumen eines Mediums pro Zeitspanne durch einen festgelegten Querschnitt transportiert wird. Der Staudinger-Index, benannt nach Hermann Staudinger und häufig auch als Grenzviskositätszahl oder intrinsische Viskosität [I.V.] bezeichnet, wird durch Extrapolation der Konzentration "c" einer verdünnten Lösung auf Null erhalten. Die intrinsische Viskosität - I.V. - hat die Einheit [dl/g] und ist demnach ein spezifisches Volumen, welches das Verhältnis von hydrodynamischem Volumen zur Molmasse ausdrückt.

Es wird hier einheitlich der Begriff der intrinsischen Viskosität [I.V.] verwendet. Unter dem "Ermitteln" eines Messwertes der intrinsischen Viskosität [I.V.] von der Schmelze oder von deren Schmelze-Teilströmen, wird der Vorgang des Messens der Viskosität und der nachfolgenden Bestimmung der intrinsischen Viskosität [I.V.] verstanden.

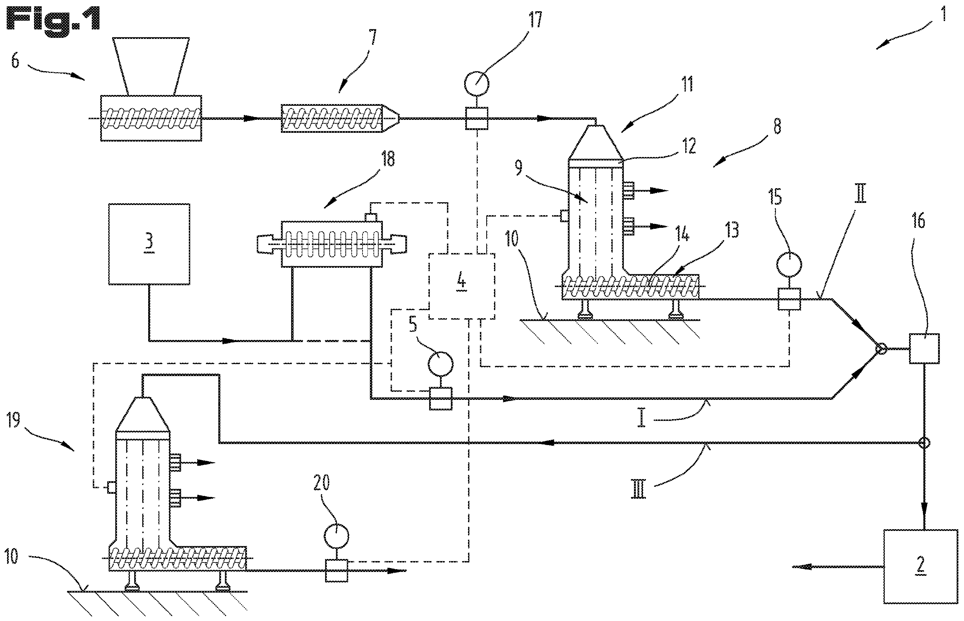

In der Fig. 1 ist eine Anlage 1 zur Durchführung des Verfahrens, insbesondere zur Herstellung einer Polykondensatschmelze aus einem Primärmaterial und zur Behandlung einer Polykondensatschmelze aus einem Sekundärmaterial in einem stark vereinfachten Anlagenschema dargestellt. Bei diesem Verfahren wird stets die Polykondensatschmelze aus im Wesentlichen artgleichen Werkstoffen aus dem Primärmaterial und dem wieder zu verwertenden und eigens behandelten Sekundärmaterial gebildet. Es können in dem jeweiligen Basiswerkstoff oder Grundwerkstoff noch in geringen Mengen Zuschlagstoffe, wie Farben, Stabilisatoren, Katalysatoren, Keimbildner oder Verarbeitungshilfsmittel mit enthalten sein oder diesem zugesetzt werden oder zugesetzt worden sein, weshalb diese als im Wesentlichen artgleich bezeichnet werden.

Als Werkstoffe zur Bildung der Polykondensatschmelze können unter anderem z.B. Polyethylenterephthalat (PET), Polytrimethylenterephthalat (PTT), Polybutylenterephthalat (PBT), Polyethylennaphthalat (PEN), Polyethylenfuranoat (PEF) oder Polyamide Anwendung finden und im Zuge des Herstellungsvorgangs hergestellt und behandelt werden. Dabei sollen die Schmelzeteilströme jedoch im Wesentlichen artgleich, d.h. von gleicher chemischer Grundzusammensetzung, sein. Polyester sind häufig mit geringen Mengen oder einem geringen Anteil (von wenigen Prozent) von Comonomeren versetzt, um bestimmte mechanische oder thermische Eigenschaften, wie etwa eine verlangsamte Kristallisation oder ähnliches zu erzielen.

Der Bereich der I.V. wird dadurch nicht wesentlich verändert, sodass ein Abgleich der Molmassenverteilung über die Anpassung des I.V. - Wertes möglich ist. Bei einem grundlegenden Unterschied der Monomere aber gelten zahlenmäßig andere Beziehungen zwischen den unterschiedlichen Viskositätsmaßen, sodass eine Anpassung der Schmelzequalität entsprechend der vorliegenden Erfindung nicht mehr möglich ist.

Analoges gilt für unterschiedliche Polyamide, die auf Monomeren unterschiedlicher Kettenlänge beruhen.

Auf die nähere Bezeichnung oder Benennung von Verbindungsleitungen oder Förderleitungen wurde im Anlagenschema verzichtet, wobei diese vereinfacht als Striche angedeutet sind. Anlagenkomponenten sind bevorzugt als Kästchen oder als Symbole vereinfacht dargestellt.

Die vereinigte Polykondensatschmelze kann nach deren Herstellvorgang z.B. direkt und unmittelbar einer Formgebungseinheit 2 zugeführt und dort weiter zu einem Produkt verarbeitet werden. So können mit der Polykondensatschmelze z.B. Fäden, Flaschen, Vorformlinge oder Folien direkt nachfolgend hergestellt werden. Damit können ein Abkühlvorgang und ein nachfolgender Erwärmungsvorgang vermieden werden. Weiters kann damit aber auch ein Abbau der Werkstoffeigenschaften vermieden werden. Unabhängig davon wäre aber auch eine Abkühlung und nachfolgende Granulierung der Polykondensatschmelze zu Kunststoff-Pellets denkbar.

Eine Frischpolyesterschmelze aus dem Primärmaterial wird auf bekannte, herkömmliche Weise in einer zumeist mehrstufigen Polykondensationseinheit 3 mit einer I.V. von 0,40 bis 0,90 dl/g hergestellt. Das Primärmaterial wird aus zumindest einem Monomer oder mehreren Monomeren synthetisiert und damit ein erster Schmelzeteilstrom "I" bereitgestellt. Der erste Schmelzeteilstrom "I" ist bei der von der Polykondensationseinheit 3 wegführenden Förderleitung mit "I" eingetragen.

Die Qualität des Primärmaterials, welche hier durch die intrinsische Viskosität [I.V.] definiert wird, wird je nach Bedarf und herzustellendem Produkt festgelegt, und dieses soll in konstanter Menge bereitgestellt werden. Dieser Sollwert der intrinsischen Viskosität der Polykondensatschmelze kann in einer Steuerungseinheit 4 als Referenzwert hinterlegt werden oder hinterlegt worden sein. Die Steuerungseinheit 4 wertet nicht nur Messergebnisse aus, sondern kann auch zur Ansteuerung der unterschiedlichsten Anlagenkomponenten dienen und mit diesen in Kommunikationsverbindung stehen. Dazu können die aus dem Stand der Technik bekannten Möglichkeiten, wie drahtlose und/oder leitungsgebundene Verbindungen, eingesetzt werden.

Um die I.V. des ersten Schmelzeteilstroms "I" aus dem Primärmaterial zu überwachen, ist eine erste Messvorrichtung 5 vorgesehen, welche z.B. als Viskosimeter ausgebildet ist. Der von der ersten Messvorrichtung 5 gemessene erste Wert kann an die Steuerungseinheit 4 übermittelt werden und in dieser dann die I.V. ermittelt werden. Damit erfolgt ein Feststellen des ersten Messwertes der intrinsischen Viskosität des ersten Schmelzeteilstroms "I" aus dem Primärmaterial und damit verbunden eine Kontrolle der Qualität. Die Qualität der Polykondensatschmelze wird hier mittels der intrinsischen Viskosität ausgedrückt und dafür kann der Sollwert definiert und festgelegt werden. Es können dazu aber auch andere Parameter oder eine andere Ermittlung von anderen Messwerten herangezogen werden.

Sollte der ermittelte erste Messwert der I.V. nicht dem Sollwert der I.V. entsprechen, ist ein Angleichen der I.V. an den festgelegten Sollwert der I.V. der Polykondensatschmelze in der Polykondensationseinheit 3 in bekannter Weise durchzuführen.

Um die in immer größeren Massen anfallenden Kunststoffe einer Wiederverwertung, insbesondere einer sortenreinen Wiederverwertung, zuzuführen, ist hier vorgesehen, dass ein aus einem artgleichen Werkstoff gebildeter zweiter Schmelzeteilstrom "II" aus dem Sekundärmaterial bereitgestellt wird wie der erste Schmelzeteilstrom "I". Unter Sekundärmaterial wird ein Werkstoff verstanden, der aus einem bereits einmal verarbeiteten Polykondensatmaterial gebildet ist. Der zweite Schmelzeteilstrom "II" ist bei einer eingetragenen Förderleitung mit "II" gekennzeichnet.

Das Aufbereiten und Bereitstellen des zweiten Schmelzeteilstroms "II" aus dem Sekundärmaterial kann derart erfolgen, dass das bereits einmal verarbeitete Polykondensatmaterial gesammelt, in einer Zerkleinerungsvorrichtung 6 zerkleinert und in einer Aufschmelzvorrichtung 7 aufgeschmolzen wird. Gegebenenfalls kann ein Reinigungsvorgang, wie z.B. ein Waschvorgang, vor und/oder nach dem Zerkleinern, durchgeführt werden. Es kann auch noch die Schmelze aus dem Sekundärmaterial nach dem Aufschmelzvorgang gefiltert werden, wie dies hinlänglich bekannt ist.

Der so bereitgestellte zweite Schmelzeteilstrom "II" aus dem Sekundärmaterial wird zur Aufbereitung, Reinigung und Behandlung derselben einer ersten Schmelze-Behandlungsvorrichtung 8 zugeführt. In dieser ersten Schmelze-Behandlungsvorrichtung 8 erfolgt eine Angleichung der I.V. an den ermittelten ersten Messwert der I.V. des ersten Schmelzeteilstroms "I" aus dem Primärmaterial. Der erste Schmelzeteilstrom "I" aus dem Primärmaterial sollte bereits eine I.V. aufweisen, welche an den festgelegten und vorgegebenen Sollwert der I.V. der herzustellenden Polykondensatschmelze angeglichen ist und somit diesem im Wesentlichen entspricht. Zumeist erfolgt eine Erhöhung oder ein Anheben der I.V. im Zuge eines Polykondensationsvorgangs. Weiters kann in der ersten Schmelze-Behandlungsvorrichtung 8 auch ein Reinigungsvorgang des aufgeschmolzenen Sekundärmaterials und damit ein Entfernen von flüchtigen organischen Verbindungen, Verunreinigungen, Zuschlagsstoffen usw. erfolgen.

Dazu umfasst die erste Schmelze-Behandlungsvorrichtung 8 eine Kammer 9, welche eine vertikale Längs- bzw. Höhenerstreckung aufweist, um einen Fallturm auszubilden. Die erste Schmelze-Behandlungsvorrichtung 8 ist auf einer zumeist ebenen Aufstandsfläche 10 abgestützt bzw. lagert auf dieser auf. Die Kammer 9 ist grundsätzlich gegenüber der äußeren Umgebung abgedichtet ausgeführt und deren Innenraum kann mittels einer nicht näher dargestellten Unterdruckvorrichtung auf einen gegenüber dem Atmosphärendruck dazu reduzierten Druck abgesenkt werden. Bevorzugt wird dabei der Druck in der Kammer 9 auf einen Druck von kleiner 20 mbar, insbesondere zwischen 0,5 mbar und 5 mbar, abgesenkt bzw. evakuiert.

Der von der Aufschmelzvorrichtung 7 aufgeschmolzene zweite Schmelzeteilstrom "II" wird der Kammer 9 in deren oberen Kopfbereich 11 zugeführt. Der Kopfbereich 11 ist jener Abschnitt der Kammer 9, welcher am weitesten von der Aufstandsfläche 10 beabstandet angeordnet ist. Weiters ist innerhalb der Kammer 9 sowie in deren Kopfbereich 11 eine Lochplatte 12 oder ein Sieb mit einer Vielzahl an Öffnungen aufgenommen oder angeordnet. Der zweite Schmelzeteilstrom "II" wird mittels der Lochplatte 12 und den in dieser befindlichen Durchtrittsöffnungen oder Kanälen in eine Vielzahl von dünnen Schmelzefäden aufgeteilt, welche als dünne Linien dargestellt sind. Die Schmelzefäden passieren die Kammer 9 im freien Fall und fallen oder strömen in Richtung auf die Aufstandsfläche 10 hinunter.

Unterhalb der Kammer 9 ist unmittelbar und seitlich daran anschließend, ein Sammelbehälter 13 angeordnet, innerhalb welchem die Schmelzefäden zu einem Schmelzebad zusammengeführt werden. Im Sammelbehälter 13 herrscht ebenfalls ein Druck von kleiner 20 mbar, nämlich bevorzugt der gleiche Druck wie in der Kammer 9, da der Sammelbehälter 13 und die Kammer 9 ohne Trennwand zueinander angeordnet sind und miteinander in unmittelbarer Strömungsverbindung stehen.

Im Sammelbehälter 13 ist ein Misch- und Austragsteil 14 aufgenommen, welches in paralleler Richtung bezüglich der Längserstreckung des Sammelbehälters 13 ausgerichtet ist. Bevorzugt ist dies in einer horizontalen Lage und somit auch parallel bezüglich der ebenfalls zumeist horizontalen Aufstandsfläche 10 ausgerichtet. Das Misch- und Austragsteil 14 kann schneckenförmig ausgebildet sein. Das Schmelzebad aus dem zweiten Schmelzeteilstrom "II" wird von dem in eine Rotationsbewegung versetzten Misch- und Austragsteil 14 ständig bewegt und durchgemischt.

Eine Höhe des Schmelzebades im Sammelbehälter 13 wird so hoch gewählt, dass das Misch- und Austragsteil 14 im Sammelbehälter 13 nicht vollständig von der Schmelze bedeckt wird. Durch den sich oberhalb des Schmelzespiegels befindlichen Freiraum kann dabei die Oberfläche der Schmelze durch die Drehbewegung des Misch- und Austragsteils 14 immer wieder aufgerissen und mehrmalig erneuert werden. Es wirkt dabei der reduzierte Druck auf das Schmelzebad ein. Die Schmelze-Behandlungsvorrichtung 8 kann auch gegen eine ungewollte Abkühlung der in dieser zu behandelnden Schmelze isoliert und/oder deren Innenraum beheizt sein.

Durch die Fallbewegung der Schmelzefäden in der Kammer 9, die Temperatur und den reduzierten Druck in der Kammer 9 beginnt eine Polykondensation der Schmelze bzw. der Schmelzefäden. Ebenso können noch enthaltene Verunreinigungen oder Einschlüsse aus der Schmelze bzw. den Schmelzefäden entfernt und mittels der Absaugvorrichtung zum Aufbau des reduzierten Drucks mit abgesaugt werden. Die bei den dünnen Schmelzefäden begonnene Polykondensation wird im Schmelzebad durch das Verweilen und in Bewegung halten fortgesetzt. Damit wird das Polymerkettenwachstum und damit verbunden eine weitere Erhöhung der intrinsischen Viskosität bewirkt. Bei der Polykondensation wird mindestens ein Nebenprodukt frei. Diese Nebenprodukte, wie z.B. Wasser, Ammoniak, niedrige Alkohole, Glykole, müssen kontinuierlich abgeführt werden, sonst stoppt die Polykondensation. Nach erfolgter Behandlung der Schmelze aus dem zweiten Schmelzeteilstrom "II" wird diese als zweiter, behandelter Schmelzeteilstrom "II" aus dem Sammelbehälter 13 abgeführt bzw. entnommen.

Von diesem zweiten, bereits behandelten Schmelzeteilstrom "II" kann mittels einer zweiten Messvorrichtung 15, welche ebenfalls z.B. als Viskosimeter ausgebildet sein kann, die Viskosität gemessen werden. Der von der zweiten Messvorrichtung 15 gemessene zweite Wert kann ebenfalls an die Steuerungseinheit 4 übermittelt werden und in dieser dann die I.V. ermittelt werden. Damit erfolgt ein Ermitteln eines zweiten Messwertes der intrinsischen Viskosität des zweiten Schmelzeteilstroms "II" aus dem Sekundärmaterial und somit eine Kontrolle der Qualität. Zusätzlich könnte parallel zu der zuvor beschriebenen Anordnung der Zerkleinerungsvorrichtung 6, der Aufschmelzvorrichtung 7 und der ersten Schmelze-Behandlungsvorrichtung 8 zur Erhöhung der Masse an Sekundärmaterial eine weitere Anordnung von zumindest einzelnen dieser Anlagenkomponenten erfolgen. So kann ein weiterer zweiter Schmelzeteilstrom "II-a" aus dem Sekundärmaterial bereitgestellt werden.

Um bei beiden Schmelzeteilströmen "I + II" die gleiche oder die annähernd gleiche Qualität zu erzielen, damit diese nachfolgend zu einem gemeinsamen Schmelzestrom vereint oder zusammengeführt werden können, ist eine Angleichung der I.V. des zweiten Schmelzeteilstroms "II" an die I.V. des ersten Schmelzeteilstroms "I" durchzuführen, wobei der erste Schmelzeteilstrom "I" bereits die festgelegte oder vorbestimmte I.V. aufzuweisen hat.

Es wird ein Differenzwert oder Vergleichswert aus dem ersten Messwert der I.V. des Primärmaterials und dem zweiten Messwert der I.V. des Sekundärmaterials gebildet oder die Messwerte in eine andere Beziehung zueinander gesetzt. Aufgrund des ermittelten oder berechneten Differenzwerts werden die Behandlungsbedingungen der ersten Schmelze-Behandlungsvorrichtung 8 daran angepasst, damit eine Erhöhung oder eine Reduzierung der I.V. der Schmelze des zweiten Schmelzeteilstroms "II" erfolgt. Sollten die Qualität und damit die I.V. des zweiten Schmelzeteilstroms "II" der Qualität und damit der I.V. des ersten Schmelzeteilstroms "I" entsprechen, ist keine Änderung oder Anpassung der Behandlungsbedingungen bei der ersten Schmelze-Behandlungsvorrichtung 8 notwendig oder durchzuführen.

Die Anpassung der Behandlungsbedingungen und damit verbunden das zu erzielende Behandlungsergebnis, kann durch die Verweilzeit und/oder die Temperatur und/oder den herrschenden Druck durchgeführt werden. Durch diesen Regelkreis wird die I.V. des zweiten Schmelzeteilstroms "II" aus dem Sekundärmaterial auf den ermittelten ersten Messwert der I.V. des Primärmaterials, welcher insbesondere dem festgelegten Sollwert der I.V. der Polykondensatschmelze entsprechen sollte, verbracht. Sollten geringfügige Abweichungen der I.V. des ersten Schmelzeteilstroms "I" vom Sollwert der I.V. der Polykondensatschmelze auftreten, wird auch der zweite Schmelzeteilstrom "II" aus dem Sekundärmaterial an diese I.V. angepasst. Damit wird erreicht, dass beide Schmelzeteilströme "I + II" stets die in etwa oder nahezu die gleiche I.V. aufweisen. Sollte jedoch eine Abweichung der I.V. des ersten Schmelzeteilstroms "I" vom Sollwert der I.V. der herzustellenden Polykondensatschmelze festgestellt werden, ist die I.V. in bekannter Weise an den Sollwert anzupassen.

Sind die beiden Schmelzeteilströme jeweils für sich bereitgestellt, werden diese zu dem gemeinsamen Schmelzestrom der Polykondensatschmelze zusammengeführt oder zu diesem vereint.

Weiters ist es noch möglich, dass der aus den beiden Schmelzeteilströmen gebildete gemeinsame Schmelzestrom der Polykondensatschmelze mittels einer Mischvorrichtung 16 durchmischt wird. Der zusammengeführte gemeinsame Schmelzestrom oder der noch zusätzlich durchmischte Schmelzestrom der Polykondensatschmelze kann der Formgebungseinheit 2 zugeführt und mittels dieser zum gewünschten Halbfertigprodukt oder Fertigprodukt umgeformt werden.

Zusätzlich könnte noch vorgesehen sein, dass nach dem Aufschmelzen des zumindest einmal bereits verarbeiteten Polykondensatmaterials und vor dem Zuführen desselben in die erste Schmelze-Behandlungsvorrichtung 8 mittels einer dritten Messvorrichtung 17, welche ebenfalls z.B. als Viskosimeter ausgebildet sein kann, die Viskosität gemessen wird. Der von der dritten Messvorrichtung 17 gemessene dritte Wert kann ebenfalls an die Steuerungseinheit 4 übermittelt werden und in dieser dann die I.V. ermittelt werden. Damit erfolgt ein Ermitteln eines dritten Messwertes der intrinsischen Viskosität des zweiten Schmelzeteilstroms "II" aus dem Sekundärmaterial noch vor dem Eintritt in die erste Schmelze-Behandlungsvorrichtung 8.

Aufgrund des ermittelten dritten Messwertes der I.V. kann Einfluss auf die Behandlungsbedingungen, nämlich die Behandlungsdauer des zweiten Schmelzeteilstroms "II" in der ersten Schmelze-Behandlungsvorrichtung 8 und/oder auf den in der Kammer 9 der ersten Schmelze-Behandlungsvorrichtung 8 herrschenden Druck genommen werden. Die Einflussnahme kann von der Steuerungseinheit 4 bewirkt werden und die Parameter und/oder Maschineneinstellungen der ersten Schmelze-Behandlungsvorrichtung 8 adaptiert werden. Die Anpassung und/oder die Umstellung der Maschineneinstellungen der ersten Schmelze-Behandlungsvorrichtung 8 basieren/basiert auf dem ermittelten dritten Messwert der I.V. des zweiten Schmelzeteilstroms "II" aus dem Sekundärmaterial und dem ermittelten ersten Messwert der I.V. des Primärmaterials. Der erste Schmelzeteilstrom "I" aus dem Primärmaterial sollte bevorzugt eine I.V. aufweisen, welche dem vorbestimmten Sollwert entspricht. Durch die geänderte oder angepasste Behandlung des zweiten Schmelzeteilstroms "II" kann damit die Angleichung der I.V. durchgeführt werden.

Der in der Polykondensationseinheit 3 hergestellte erste Schmelzeteilstrom "I" aus dem Primärmaterial kann zum Angleichen oder Anheben der I.V. desselben an den festgelegten Sollwert der I.V. der Polykondensatschmelze einer zweiten Schmelze-Behandlungsvorrichtung 18 zugeführt werden. Diese kann insbesondere von einem Hochviskositäts-Scheibenreaktor gebildet sein, wie dieser hinlänglich bekannt ist und vereinfacht dargestellt worden ist. Damit kann der Wert der I.V. auf bis zu 1,2 dl/g angehoben oder verbessert werden.

Es wäre auch noch möglich, aus dem gemeinsamen Schmelzestrom der Polykondensatschmelze einen dritten Schmelzeteilstrom "III", welcher mit "III" bei einer Förderleitung gekennzeichnet ist, zu entnehmen oder abzuzweigen. Der dritte Schmelzeteilstrom "III" kann einer weiteren Schmelze-Behandlungsvorrichtung 19 zugeführt werden. In dieser weiteren Schmelze-Behandlungsvorrichtung 19 kann die entnommene Teilmenge weiter behandelt und beeinflusst werden. So könnte die I.V. des dritten Schmelzeteilstroms "III" bezüglich der I.V. des gemeinsamen Schmelzestroms noch weiter erhöht werden. Es kann die weitere Schmelze-Behandlungsvorrichtung 19 in ihrer Wirkungsweise gleichartig wie die erste Schmelze-Behandlungsvorrichtung 8 sein. Insbesondere wird als weitere Schmelze-Behandlungsvorrichtung 19 eine solche, wie die erste Schmelze-Behandlungsvorrichtung 8 verwendet. Um unnötige Wiederholungen zu vermeiden, wird auf die detaillierte Beschreibung der ersten Schmelze-Behandlungsvorrichtung 8 hingewiesen und Bezug genommen.

Nach dem Durchtritt und Behandlung des dritten Schmelzeteilstroms "III" durch die weitere Schmelze-Behandlungsvorrichtung 19 könnte mit einer vierten Messvorrichtung 20 die Viskosität und in weiterer Folge die Qualität des dritten, behandelten Schmelzeteilstroms "III" ermittelt werden. Die vierte Messvorrichtung 20 kann ebenfalls z.B. als Viskosimeter ausgebildet sein, um die Viskosität zu messen. Der von der vierten Messvorrichtung 20 gemessene vierte Wert kann ebenfalls an die Steuerungseinheit 4 übermittelt werden und in dieser dann die I.V. des dritten, behandelten Schmelzeteilstroms "III" ermittelt werden.

Der Anteil der Schmelze des zweiten Schmelzeteilstroms "II" aus dem Sekundärmaterial in Bezug auf die Gesamtheit der Polykondensatschmelze kann von einigen wenigen % (z.B. 1%, 5% oder 10%) bis hin zu 99 % betragen. Der Anteil bzw. die Gesamtheit kann auf die Masse [Gew. %] oder das Volumen [Vol. %] oder den Volumenstrom pro Zeiteinheit bezogen sein.

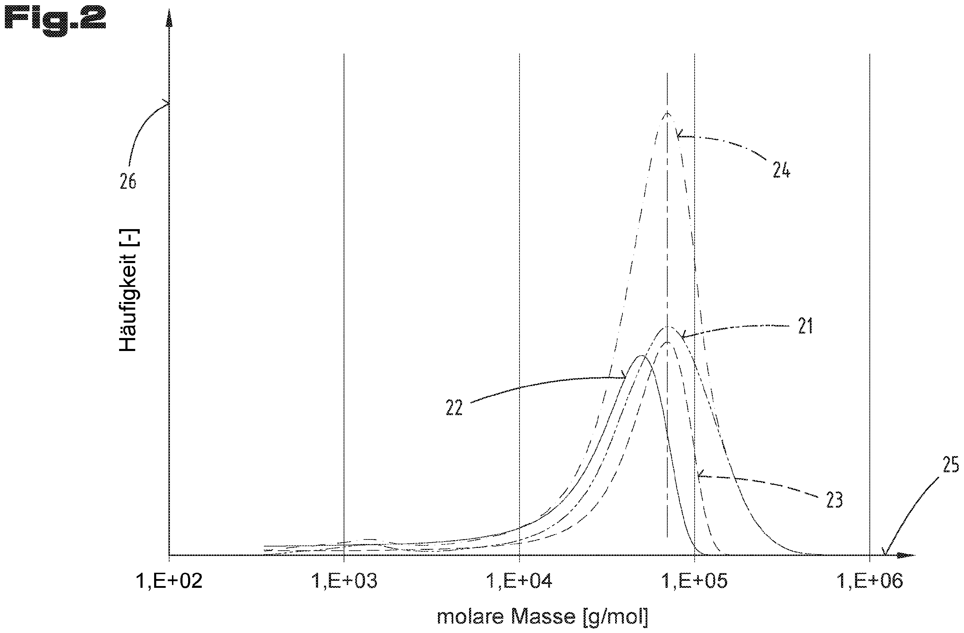

Die Fig. 2 zeigt in einem Liniendiagramm beispielhaft die Verteilung der molaren Masse bzw. die Molmassenverteilungen der einzelnen Schmelzeteilströme sowie des aus den beiden Schmelzeteilströmen "I" und "II" zusammengeführten und vereinten, gemeinsamen Schmelzestroms der Polykondensatschmelze.

Eine erste Diagrammlinie 21 zeigt die Molmassenverteilung des in der Polykondensationseinheit 3 hergestellten ersten Schmelzeteilstroms "I" aus dem Primärmaterial und ist in einer strich-zweipunktierten Linie dargestellt. Eine zweite Diagrammlinie 22 dargestellt in einer Voll-Linie, zeigt die Molmassenverteilung der von der Aufschmelzvorrichtung 7 bereitgestellten Schmelze aus dem Sekundärmaterial vor dem Eintritt in die erste Schmelze-Behandlungsvorrichtung 8. Es zeigt eine dritte Diagrammlinie 23, dargestellt in einer strichlierten Linie, die Molmassenverteilung der behandelten und aus der ersten Schmelze-Behandlungsvorrichtung 8 ausgetretenen Schmelze aus dem Sekundärmaterial. Der erste Schmelzeteilstrom "I" aus dem Primärmaterial kann auch noch mittels der zweiten Schmelze-Behandlungsvorrichtung 18 behandelt und damit die I.V. an den festgelegten Sollwert der I.V. der Polykondensatschmelze angepasst, insbesondere angehoben bzw. verbessert, werden.

Schließlich ist in einer vierten Diagrammlinie 24 die Molmassenverteilung des aus den beiden Schmelzeteilströmen "I" und "II" zusammengeführten und vereinten, gemeinsamen Schmelzestroms der Polykondensatschmelze gezeigt. Die vierte Diagrammlinie 24 ist mit einer strich-punktierten Linie dargestellt.

Auf einer Abszisse 25 des Liniendiagramms ist die molare Masse in [g/mol] aufgetragen, welche auch als Molmasse oder Molgewicht bezeichnet wird. In der Chemie ist für die molare Masse eine von der SI-Einheit [kg/mol] abweichende Angabe üblich. Auf einer Ordinate 26 ist die Häufigkeit eines Moleküls mit der jeweiligen molaren Masse aufgetragen. Die Angabe auf der Abszisse 25 mit 1,E+02 entspricht einem Wert von 100 und die Angabe 1,E+06 einem Wert von 1 000 000.

Die von der Aufschmelzvorrichtung 7 bereitgestellte Schmelze aus dem Sekundärmaterial weist vor dem Eintritt in die erste Schmelze-Behandlungsvorrichtung 8 zumeist eine niedrigere I.V. auf als der in der Polykondensationseinheit 3 hergestellte sowie gegebenenfalls in der zweiten Schmelze-Behandlungsvorrichtung 18 behandelte erste Schmelzeteilstrom "I" aus dem Primärmaterial.

Die Schmelze aus dem Sekundärmaterial weist beim Eintritt in die erste Schmelze-Behandlungsvorrichtung 8 eine niedrigere I.V. als die Schmelze aus dem Primärmaterial auf. Daher liegt auch das Maximum der Molmassenverteilung niedriger, wie dies die zweite Diagrammlinie 22 zeigt. In der ersten Schmelze-Behandlungsvorrichtung 8 wird die Kurve so weit zu höheren Molmassen verschoben, dass ihr Maximum mit dem der Schmelze aus dem Primärmaterial übereinstimmt. Dies ist aus einer Zusammenschau der ersten Diagrammlinie 21 und der dritten Diagrammlinie 23 ersichtlich. Beim Zusammenführen der Schmelzeteilströme "I" und "II" kommt es zu einer kombinierten Molmassenverteilung, deren Maximum sich unverändert bei derselben Molmasse befindet. Dies zeigt die vierte Diagrammlinie 24. Damit kann ohne weiteres Mischen der beiden Schmelzeteilströme "I" und "II" eine homogenere Schmelze geschaffen werden, als sie mit Verfahren nach dem derzeitigen Stand der Technik möglich wäre.

Dies hat einen positiven Einfluss auf zahlreiche physikalische und mechanische Eigenschaften des Kunststoffmaterials sowie der daraus nachfolgend hergestellten Kunststoff-Gegenstände.

Abschließend sei noch erwähnt, dass die einzelnen Verfahrensschritte und deren zeitliche Abfolge nicht zwingend in der angeführten Reihenfolge erfolgen muss, sondern auch eine davon abweichende zeitliche Abfolge möglich ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Anlage | I | erster Schmelzeteilstrom |
| 2 | Formgebungseinheit | II | zweiter Schmelzeteilstrom |
| 3 | Polykondensationseinheit | III | dritter Schmelzeteilstrom |
| 4 | Steuerungseinheit | | |
| 5 | erste Messvorrichtung | | |
| 6 | Zerkleinerungsvorrichtung | | |
| 7 | Aufschmelzvorrichtung | | |
| 8 | erste Schmelze-Behandlungsvorrichtung | | |
| 9 | Kammer | | |
| 10 | Aufstandsfläche | | |
| 11 | Kopfbereich | | |
| 12 | Lochplatte | | |
| 13 | Sammelbehälter | | |
| 14 | Misch- und Austragsteil | | |
| 15 | zweite Messvorrichtung | | |
| 16 | Mischvorrichtung | | |
| 17 | dritte Messvorrichtung | | |
| 18 | zweite Schmelze-Behandlungsvorrichtung | | |
| 19 | weitere Schmelze-Behandlungsvorrichtung | | |
| 20 | vierte Messvorrichtung | | |
| 21 | erste Diagrammlinie | | |
| 22 | zweite Diagrammlinie | | |
| 23 | dritte Diagrammlinie | | |
| 24 | vierte Diagrammlinie | | |
| 25 | Abszisse | | |
| 26 | Ordinate | | |

## Patentansprüche

1. Verfahren zur Herstellung einer Polykondensatschmelze aus einem Primärmaterial und einem Sekundärmaterial aus jeweils im Wesentlichen artgleichen Werkstoffen von gleicher chemischer Grundzusammensetzung, umfassend folgende Schritte:
- Bereitstellen eines ersten Schmelzeteilstroms (I) aus dem Primärmaterial, welches Primärmaterial aus zumindest einem Monomer synthetisiert wurde,
- Ermitteln eines ersten Messwertes der intrinsischen Viskosität des ersten Schmelzeteilstroms (I) aus dem Primärmaterial,
- Bereitstellen eines zweiten Schmelzeteilstroms (II) aus dem Sekundärmaterial, welches Sekundärmaterial aus einem zumindest einmal bereits verarbeiteten Polykondensatmaterial gebildet ist,
- Ermitteln eines zweiten Messwertes der intrinsischen Viskosität des zweiten Schmelzeteilstroms (II) aus dem Sekundärmaterial,
- Bildung eines Differenzwertes aus dem ersten Messwert der intrinsischen Viskosität des Primärmaterials und dem zweiten Messwert der intrinsischen Viskosität des Sekundärmaterials,
- Erhöhen oder Reduzieren der intrinsischen Viskosität des zweiten Schmelzeteilstroms (II) aus dem Sekundärmaterial aufgrund des ermittelten Differenzwertes mittels einer ersten Schmelze-Behandlungsvorrichtung (8) auf den ermittelten ersten Messwert der intrinsischen Viskosität des ersten Schmelzeteilstroms (I) aus dem Primärmaterial oder unverändertes Beibehalten der intrinsischen Viskosität des zweiten Schmelzeteilstroms (II) aus dem Sekundärmaterial aufgrund des ermittelten Differenzwertes,
- Nachfolgende Bildung eines gemeinsamen Schmelzestroms der Polykondensatschmelze aus dem zweiten Schmelzeteilstrom (II) aus dem Sekundärmaterial, bei welchem die durch die intrinsische Viskosität definierte Qualität an die Qualität des ersten Schmelzeteilstroms (I) angeglichen worden ist oder diese bereits aufweist, durch Zusammenführen und Vereinen mit dem ersten Schmelzeteilstrom (I) aus dem Primärmaterial.

2. Verfahren nach Anspruch 1, **dadurch gekennzeichnet, dass** der aus den beiden Schmelzeteilströmen (I, II) gebildete gemeinsame Schmelzestrom der Polykondensatschmelze mittels einer Mischvorrichtung (16) durchmischt wird.

3. Verfahren nach Anspruch 1 oder 2, **dadurch gekennzeichnet, dass** der gemeinsame Schmelzestrom der Polykondensatschmelze unmittelbar einer nachfolgend angeordneten Formgebungseinheit (2) zugeführt wird.

4. Verfahren nach Anspruch 1 oder 2, **dadurch gekennzeichnet, dass** der gemeinsame Schmelzestrom der Polykondensatschmelze granuliert wird.

5. Verfahren nach einem der vorhergehenden Ansprüche, **dadurch gekennzeichnet, dass** zur Bildung des zweiten Schmelzeteilstroms (II) aus dem Sekundärmaterial ein bereitgestelltes, zumindest einmal bereits verarbeitetes Polykondensatmaterial zerkleinert, gegebenenfalls gereinigt wird, und in einer Aufschmelzvorrichtung (7) der zweite Schmelzeteilstrom (II) aus dem Sekundärmaterial gebildet wird.

6. Verfahren nach Anspruch 5, **dadurch gekennzeichnet, dass** nach dem Aufschmelzen des zumindest einmal bereits verarbeiteten Polykondensatmaterials und vor dem Zuführen desselben in die erste Schmelze-Behandlungsvorrichtung (8) ein dritter Messwert der intrinsischen Viskosität des zweiten Schmelzeteilstroms (II) aus dem Sekundärmaterial ermittelt wird.

7. Verfahren nach einem der vorhergehenden Ansprüche, **dadurch gekennzeichnet,**
- **dass** der zweite Schmelzeteilstrom (II) der ersten Schmelze-Behandlungsvorrichtung (8) einer Kammer (9) in einem von einer Aufstandsfläche (10) beabstandeten Kopfbereich (11) zugeführt wird, in welcher Kammer (9) ein Druck kleiner 20 mbar herrscht,
- **dass** der zweite Schmelzeteilstrom (II) mittels einer Lochplatte (12) mit einer Vielzahl von Öffnungen in dünne Schmelzefäden aufgeteilt wird,
- **dass** die Schmelzefäden die Kammer (9) im freien Fall in Richtung auf die Aufstandsfläche (10) passieren,
- **dass** die Schmelzefäden in einem Sammelbehälter (13) unterhalb der Kammer (9) zu einem Schmelzebad zusammengeführt werden, wobei der Sammelbehälter (13) im unmittelbaren seitlichen Anschluss an die Kammer (9) angeordnet ist, und im Sammelbehälter (13) ebenfalls ein Druck von kleiner 20 mbar herrscht,
- **dass** die das Schmelzebad bildende Schmelze im Sammelbehälter (13) von einem in horizontaler Lage ausgerichteten, vorzugsweise schneckenförmigen, Misch- und Austragsteil (14) durchmischt wird,
- **dass** eine Höhe des Schmelzebades im Sammelbehälter (13) so hoch gewählt wird, dass das Misch- und Austragsteil (14) im Sammelbehälter (13) nicht vollständig von der Schmelze bedeckt wird und dabei die Oberfläche der Schmelze durch eine Drehbewegung des Misch- und Austragsteils (14) immer wieder aufgerissen und mehrmalig erneuert wird, und dabei der reduzierte Druck auf das Schmelzebad einwirkt,
- **dass** die bei den dünnen Schmelzefäden begonnene Polykondensation im Schmelzebad durch das Verweilen und in Bewegung halten fortgesetzt wird, und so das Polymerkettenwachstum und damit eine weitere Erhöhung der intrinsischen Viskosität bewirkt wird, und
- **dass** die behandelte Schmelze als zweiter, behandelter Schmelzeteilstrom (II) aus dem Sammelbehälter (13) abgeführt wird.

8. Verfahren nach einem der vorhergehenden Ansprüche, **dadurch gekennzeichnet, dass** die Behandlungsdauer des zweiten Schmelzeteilstroms (II) in der ersten Schmelze-Behandlungsvorrichtung (8) und/oder der in der Kammer (9) der ersten Schmelze-Behandlungsvorrichtung (8) herrschende Druck und/oder die in der Kammer (9) der ersten Schmelze-Behandlungsvorrichtung (8) herrschende Temperatur basierend auf dem ermittelten dritten Messwert der intrinsischen Viskosität des zweiten Schmelzeteilstroms (II) aus dem Sekundärmaterial und dem ermittelten ersten Messwert der intrinsischen Viskosität des Primärmaterials ermittelt werden und die Behandlung und damit die Angleichung der intrinsischen Viskosität durchgeführt wird.

9. Verfahren nach einem der vorhergehenden Ansprüche, **dadurch gekennzeichnet, dass** ein dritter Schmelzeteilstrom (III) aus dem gemeinsamen Schmelzestrom der Polykondensatschmelze entnommen wird oder abgezweigt wird und der dritte Schmelzeteilstrom (III) einer weiteren Behandlungsvorrichtung (19) zugeführt wird.

10. Verfahren nach Anspruch 9, **dadurch gekennzeichnet, dass** als weitere Behandlungsvorrichtung (19) eine solche, wie die erste Behandlungsvorrichtung (8) verwendet wird.

11. Verfahren nach einem der vorhergehenden Ansprüche, **dadurch gekennzeichnet, dass** ein Sollwert der intrinsischen Viskosität für die herzustellende Polykondensatschmelze festgelegt wird.

12. Verfahren nach Anspruch 11, **dadurch gekennzeichnet, dass** der Sollwert der intrinsischen Viskosität in einer Steuerungseinheit (4) als Referenzwert hinterlegt wird.

13. Verfahren nach Anspruch 11 oder 12, **dadurch gekennzeichnet, dass** basierend auf dem ermittelten ersten Messwert der intrinsischen Viskosität des ersten Schmelzeteilstroms (I) aus dem Primärmaterial die intrinsische Viskosität des ersten Schmelzeteilstroms (I) an den festgelegten Sollwert der intrinsischen Viskosität der herzustellenden Polykondensatschmelze angeglichen wird.

14. Verfahren nach Anspruch 13, **dadurch gekennzeichnet, dass** das Angleichen der intrinsischen Viskosität des ersten Schmelzeteilstroms (I) aus dem Primärmaterial an den festgelegten Sollwert der intrinsischen Viskosität der Polykondensatschmelze mittels einer zweiten Schmelze-Behandlungsvorrichtung (18), insbesondere eines Hochviskositäts-Scheibenreaktors, durchgeführt wird.

15. Verfahren nach Anspruch 1, **dadurch gekennzeichnet, dass** die Molmassenverteilung des ersten und zweiten Schmelzeteilstroms (I, II) jeweils ein Maximum bei der gleichen Molmasse aufweist.

## Claims

1. A method for producing a polycondensate melt from a primary material and a secondary material from materials of substantially the same type and of the same basic chemical composition, comprising following steps:
- providing a first partial melt stream (I) of the primary material, which primary material has been synthesized from at least one monomer,
- determining a first measured value of the intrinsic viscosity of the first partial melt stream (I) of the primary material,
- providing a second partial melt stream (II) of the secondary material, which secondary material is formed of a polycondensate material that has already been processed at least once,
- determining a second measured value of the intrinsic viscosity of the second partial melt stream (II) of the secondary material,
- forming a difference value from the first measured value of the intrinsic viscosity of the primary material and the second measured value of the intrinsic viscosity of the secondary material,
- increasing or reducing the intrinsic viscosity of the second partial melt stream (II) of the secondary material to the determined first measured value of the intrinsic viscosity of the first partial melt stream (I) of the primary material by means of a first melt treatment device (8), based on of the determined difference value, or unchangedly maintaining the intrinsic viscosity of the second partial melt stream (II) of the secondary material based on the determined difference value,
- subsequent formation of a common melt stream of the polycondensate melt from the second partial melt stream (II) of the secondary material, in which the quality defined by the intrinsic viscosity has been aligned with or already has the quality of the first partial melt stream (I), by means of combining and uniting with the first partial melt stream (I) of the primary material.

2. The method according to claim 1, **characterized in that** the common melt stream of the polycondensate melt formed of the two partial melt streams (I, II) is mixed by means of a mixing device (16).

3. The method according to claim 1 or 2, **characterized in that** the common melt stream of the polycondensate melt is immediately fed to a shaping unit (2) arranged downstream.

4. The method according to claim 1 or 2, **characterized in that** the common melt stream of the polycondensate melt is granulated.

5. The method according to one of the preceding claims, **characterized in that**, for creating the second partial melt stream (II) of the secondary material, a provided polycondensate material, which has already been processed at least once, is comminuted, possibly cleaned, and in a melting device (7), the second partial melt stream (II) of the secondary material is formed.

6. The method according to claim 5, **characterized in that**, after melting the polycondensate material that has already been processed at least once and before feeding the same into the first melt treatment device (8) a third measured value of the intrinsic viscosity of the second partial melt stream (II) of the secondary material is determined.

7. The method according to one of the preceding claims, **characterized in that**
- the second partial melt stream (II) of the first melt treatment device (8) is fed to a chamber (9) in a head region (11) distanced from a contact surface (10), in which chamber (9) a pressure is lower than 20 mbar,
- that the second partial melt stream (II) is divided into thin melt threads by means of a perforated plate (12) having a plurality of openings,
- that the melt threads pass the chamber (9) in a free fall in a direction toward the contact surface (10),
- that the melt threads are combined into a melt bath in a collection container (13) below the chamber (9), wherein the collection container (13) is arranged so as to immediately link laterally to the chamber (9), and a pressure in the collection container (13) is also lower than 20 mbar,
- that the melt constituting the melt bath in the collection container (13) is mixed by a, preferably helical, mixing and discharge part (14) oriented in a horizontal position,
- that a height of the melt bath in the collection container (13) is selected at such a height that the mixing and discharge part (14) in the collection container (13) is not entirely covered by the melt, wherein the surface of the melt is repeatedly torn open and renewed multiple times due to a rotational movement of the mixing and discharge part (14), and in the course of this, the reduced pressure acts on the melt bath,
- that the polycondensation, which started with the thin melt threads, is continued by the remaining and keeping in motion, and hence, the polymer chain growth and with that, a further increase of the intrinsic viscosity is effected, and **in that**
- that the treated melt is discharged from the collection container (13) as the second, treated partial melt stream (II).

8. The method according to one of the preceding claims, **characterized in that** the duration of the treatment of the second partial melt stream (II) in the first melt treatment device (8) and/or the pressure present in the chamber (9) of the first melt treatment device (8) and/or the temperature in the chamber (9) of the first melt treatment device (8) are determined based on the determined third measured value of the intrinsic viscosity of the second partial melt stream (II) of the secondary material and the determined first measured value of the intrinsic viscosity of the primary material, and the treatment and therefore the alignment of the intrinsic viscosity is carried out.

9. The method according to one of the preceding claims, **characterized in that** a third partial melt stream (III) is removed or diverted from the common melt stream of the polycondensate melt, and the third partial melt stream (III) is fed to a further treatment device (19).

10. The method according to claim 9, **characterized in that**, as a further treatment device (19) a treatment device like the first treatment device (8) is used.

11. The method according to one of the preceding claims, **characterized in that** a target value of the intrinsic viscosity for the polycondensate melt to be produced is defined.

12. The method according to claim 11, **characterized in that** the target value of the intrinsic viscosity is stored in a control unit (4) as a reference value.

13. The method according to claim 11 or 12, **characterized in that**, based on the determined first measured value of the intrinsic viscosity of the first partial melt stream (I) of the primary material, the intrinsic viscosity of the first partial melt stream (I) is aligned with the predetermined target value of the intrinsic viscosity of the polycondensate melt to be produced.

14. The method according to claim 13, **characterized in that** the alignment of the intrinsic viscosity of the first partial melt stream (I) of the primary material with the predetermined target value of the intrinsic viscosity of the polycondensate melt is carried out by means of a second melt treatment device (18), in particular a high-viscosity disc reactor.

15. The method according to claim 1, **characterized in that** the molar mass distribution of the first and second partial melt stream (I, II) each have a maximum at the same molar mass.

## Revendications

1. Procédé de fabrication d'un polycondensat en fusion à partir d'un matériau primaire et d'un matériau secondaire, respectivement constitués de matériaux de types globalement identiques de même composition chimique de base, comprenant les étapes suivantes :
- mise à disposition d'un premier flux partiel de fonte (I) constitué du matériau primaire, ce matériau primaire ayant été synthétisé à partir d'au moins un monomère,
- détermination d'une première valeur de mesure de la viscosité intrinsèque du premier flux partiel de fonte (I) constitué du matériau primaire,
- mise à disposition d'un deuxième flux partiel de fonte (II) constitué du matériau secondaire, ce matériau secondaire étant constitué d'un matériau de type polycondensat déjà traité au moins une fois,
- détermination d'une deuxième valeur de mesure de la viscosité intrinsèque du deuxième flux partiel de fonte (II) constitué du matériau secondaire,
- formation d'une valeur de différence à partir de la première valeur de mesure de la viscosité intrinsèque du matériau primaire et de la deuxième valeur de mesure de la viscosité intrinsèque du matériau secondaire,
- augmentation ou réduction de la viscosité intrinsèque du deuxième flux partiel de fonte (II) constitué du matériau secondaire, sur la base de la valeur de différence déterminée, au moyen d'un premier dispositif de traitement de fonte (8) sur la première valeur de mesure déterminée de la viscosité intrinsèque du premier flux partiel de fonte (I) constitué du matériau primaire ou conservation inchangée de la viscosité intrinsèque du deuxième flux partiel de fonte (II) constitué du matériau secondaire sur la base de la valeur de différence déterminée,
- formation d'un flux de fonte commun du polycondensat en fusion à partir du deuxième flux partiel de fonte (II) constitué du matériau secondaire, dans lequel la qualité définie par la viscosité intrinsèque a été ajustée la qualité du premier flux partiel de fonte (I) ou présente déjà celle-ci, par regroupement et unification avec le premier flux partiel de fonte (I) constitué du matériau primaire.

2. Procédé selon la revendication 1, **caractérisé en ce que** le flux de fonte commun, constitué des deux flux partiels de fonte (I, II), du polycondensat en fusion, est mélangé au moyen d'un dispositif de mélange (16).

3. Procédé selon la revendication 1 ou 2, **caractérisé en ce que** le flux de fonte commun du polycondensat en fusion est introduit directement dans une unité de formage (2) disposée en aval.

4. Procédé selon la revendication 1 ou 2, **caractérisé en ce que** le flux de fonte commun du polycondensat en fusion est granulé.

5. Procédé selon l'une des revendications précédentes, **caractérisé en ce que**, pour la formation du deuxième flux partiel de fonte (II) constitué du matériau secondaire, un polycondensat mis à disposition, déjà traité au moins une fois, est broyé, le cas échéant purifié et le deuxième flux partiel de fonte (II) constitué du matériau secondaire est formé dans un dispositif de fusion (7).

6. Procédé selon la revendication 5, **caractérisé en ce que**, après la fusion du matériau de type polycondensat déjà traité au moins une fois et avant l'introduction de celui-ci dans le premier dispositif de traitement de fonte (8), une troisième valeur de mesure de la viscosité intrinsèque du deuxième flux partiel de fonte (II) constitué du matériau secondaire est déterminée.

7. Procédé selon l'une des revendications précédentes, **caractérisé en ce que**
- le deuxième flux partiel de fonte (II) du premier dispositif de traitement de fonte (8) est introduit dans une chambre (9) dans une zone de tête (11) distante d'une surface de contact (10), une pression inférieure à 20 mbar régnant dans cette chambre (9),
- le deuxième flux partiel de fonte (II) est réparti, au moyen d'une plaque perforée (12) avec une pluralité d'ouvertures, en minces fils de fonte,
- les fils de fonte traversent la chambre (9) en chute libre en direction de la surface de contact (10),
- les fils de conte sont regroupés dans un récipient collecteur (13) en dessous de la chambre (9) dans un bain de fonte, dans lequel le récipient collecteur (13) est disposé immédiatement après la chambre (9) et, dans le récipient collecteur (13), il règne également une pression inférieure à 20 mbar,
- la fonte constituant le bain de fonte dans le récipient collecteur (13) est mélangé par un élément de mélange et d'évacuation (14) orienté horizontalement, de préférence sous la forme d'une vis sans fin,
- une hauteur du bain de fonte dans le récipient collecteur (13) est choisie de façon à ce que l'élément de mélange et d'évacuation (14) dans le récipient collecteur (13) ne soit pas entièrement recouvert par la fonte et à ce que la surface de la fonte soit en permanence déchirée et plusieurs fois renouvelée par un mouvement de rotation de l'élément de mélange et d'évacuation (14) et la pression réduite agit sur le bain de fonte,
- la polycondensation commencée dans les minces fils de fonte dans le bain de fonte est prolongée par le séjour et le maintien en mouvement et cela provoque la croissance du polymère et donc une augmentation supplémentaire de la viscosité intrinsèque et
- la fonte traitée est évacuée, en tant que deuxième flux partiel de fonte (II) traité, hors du récipient collecteur (13).

8. Procédé selon l'une des revendications précédentes, **caractérisé en ce que** la durée de traitement du deuxième flux partiel de fonte (II) dans le premier dispositif de traitement de fonte (8) et/ou la pression régnant dans la chambre (9) du premier dispositif de traitement de fonte (8) et/ou la température régnant dans la chambre (9) du premier dispositif de traitement de fonte (8) sont déterminées sur la base de la troisième valeur de mesure déterminée de la viscosité intrinsèque du deuxième flux partiel de fonte (II) constitué du matériau secondaire et de la première valeur de mesure déterminée de la viscosité intrinsèque du matériau primaire et le traitement et donc l'ajustement de la viscosité intrinsèque est effectué.

9. Procédé selon l'une des revendications précédentes, **caractérisé en ce qu'**un troisième flux partiel de fonte (III) est prélevé ou dérivé du flux de fonte commun du polycondensat en fusion et le troisième flux partiel de fonte (III) est introduit dans un dispositif de traitement supplémentaire (19).

10. Procédé selon la revendication 9, **caractérisé en ce que**, en tant que dispositif de traitement supplémentaire (19), un dispositif semblable au premier dispositif de traitement (8) est utilisé.

11. Procédé selon l'une des revendications précédentes, **caractérisé en ce qu'**une valeur de consigne de la viscosité intrinsèque est déterminée pour le polycondensat en fusion à fabriquer.

12. Procédé selon la revendication 11, **caractérisé en ce que** la valeur de consigne de la viscosité intrinsèque est enregistrée en tant que valeur de référence dans une unité de commande (4).

13. Procédé selon la revendication 11 ou 12, **caractérisé en ce que**, sur la base de la première valeur de mesure déterminée de la viscosité intrinsèque du premier flux partiel de fonte (I) constitué du matériau primaire, la viscosité intrinsèque du premier flux partiel de fonte (I) est ajustée à la valeur de consigne déterminée de la viscosité intrinsèque du polycondensat en fusion à fabriquer.

14. Procédé selon la revendication 13, **caractérisé en ce que** l'ajustement de la viscosité intrinsèque du premier flux partiel de fonte (I) constitué du matériau primaire à la valeur de consigne déterminée de la viscosité intrinsèque du polycondensat en fusion est effectué au moyen d'un deuxième dispositif de traitement de fonte (18), plus particulièrement d'un réacteur à disque à haute viscosité.

15. Procédé selon la revendication 1, **caractérisé en ce que** la répartition des masses molaires des premier et deuxième flux partiels de fonte (I, II) comprend respectivement un maximum à la même masse molaire.
